(19) Europäisches Patentamt
European Patent Office
Office européen des brevets

(11) **EP 4 502 638 A1**

(12) **EUROPEAN PATENT APPLICATION**

(43) Date of publication:
**05.02.2025 Bulletin 2025/06**

(21) Application number: **23188623.5**

(22) Date of filing: **31.07.2023**

(51) International Patent Classification (IPC):
**G01S 3/10** $^{(2006.01)}$     **G01S 3/14** $^{(2006.01)}$
**G01S 3/74** $^{(2006.01)}$

(52) Cooperative Patent Classification (CPC):
**G01S 3/74; G01S 3/10; G01S 3/14;** G01S 3/46

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Rohde & Schwarz GmbH & Co. KG 81671 München (DE)**

(72) Inventors:
• **WIDMANN, Sebastian**
  **85652 Pliening (DE)**
• **HEDMANN, Karin**
  **80689 München (DE)**
• **STEIN, Moritz**
  **81827 München (DE)**

(74) Representative: **Kehl, Ascherl, Liebhoff & Ettmayr Patentanwälte Partnerschaft mbB Emil-Riedel-Straße 18 80538 München (DE)**

(54) **COMPUTER IMPLEMENTED METHOD, COMPUTER PROGRAM PRODUCT, AND MEASUREMENT APPLICATION DEVICE FOR DIRECTION FINDING**

(57)     The present disclosure provides a computer implemented method for estimating the number of received signals in a direction-finding measurement application, the method comprising receiving input data acquired with at least one direction-finding antenna, providing the input data to a pre-trained artificial intelligence algorithm that is trained to determine the number of received signals based on the input data, and outputting the number of received signals determined by the pre-trained artificial intelligence algorithm. Further, the present disclosure provides a respective computer program product, and a respective measurement application device.

```
┌─────────────────────────────────────────────────────────────────────┐
│ receiving antenna data acquired with at least one measurement antenna │ ～ S1
└─────────────────────────────────────────────────────────────────────┘
                                    ↓
┌─────────────────────────────────────────────────────────────────────┐
│ providing the antenna data to a pre-trained artificial intelligence   │
│ algorithm that is trained to determine the number of received signals │ ～ S2
│ based on the antenna data                                             │
└─────────────────────────────────────────────────────────────────────┘
                                    ↓
┌─────────────────────────────────────────────────────────────────────┐
│ outputting the number of received signals determined by the pre-      │
│ trained artificial intelligence algorithm                             │ ～ S3
└─────────────────────────────────────────────────────────────────────┘
```

Fig. 1

EP 4 502 638 A1

Processed by Luminess, 75001 PARIS (FR)

## Description

## TECHNICAL FIELD

The disclosure relates to a computer implemented method. Further, the disclosure relates to a respective computer program product, and a respective measurement application device.

## BACKGROUND

Although applicable to any type of measurement application device or measurement application, the present disclosure will mainly be described in conjunction with direction-finding measurement application devices, or direction-finding measurement applications.

In direction-finding applications, usually RF signals are measured and analyzed to determine the direction of origin of an RF signal. In modern communication systems or direction-finding applications, multiple emitters may be present.

Correlative interferometers are only designed for estimating one angle of arrival for one single emitter. With correlative interferometers the information about the number of emitters is crucial, since the bearing error might be large in case of multiple emitters.

Accordingly, there is a need for improving direction-finding measurements.

## SUMMARY

The above stated problem is solved by the features of the independent claims. It is understood, that independent claims of a claim category may be formed in analogy to the dependent claims of another claim category.

Accordingly, it is provided:
A computer implemented method for estimating the number of received signals in a direction-finding measurement application, the method comprising receiving input data acquired with at least one direction-finding antenna, providing the input data to a pre-trained artificial intelligence algorithm that is trained to determine the number of received signals based on the input data, and outputting the number of received signals determined by the pre-trained artificial intelligence algorithm.

Further, it is provided:
A computer program product comprising instructions that when executed by a processor cause the processor to perform a method according to the present disclosure.

Further, it is provided:
A measurement application device, comprising a data interface configured to receive input data acquired with at least one direction-finding antenna, an output interface, and a processor coupled to the data interface, and to the output interface, wherein the processor is configured to provide the input data to a pre-trained artificial intelligence algorithm that is trained to determine the number of received signals based on the input data, and to execute the pre-trained artificial intelligence algorithm, and wherein the processor is further configured to output the number of received signals determined by the pre-trained artificial intelligence algorithm via the output interface.

The present disclosure is based on the finding that knowing the number or at least an indication regarding the number of received signals may provide an additional quality metric in a direction-finding measurement application.

Known methods for determining the number of signals or a respective indication, like the Akaike Information Criterion (AIC), or the Minimum Description Length (MDL) require the covariance matrix of the response from all antenna elements. In order to get reliable results, a good SNR as well as many snapshots are needed. Furthermore, they require an eigenvalue decomposition which is computationally expensive. complex computations. Consequently, such approaches may not be used in applications where time is crucial (e.g., pulsed signals, hoppers, etc. ) or in devices with only little computational power.

The present disclosure, therefore provides the computer implemented method, and the measurement application device for estimating the number of received signals without the need of the covariance matrix and the subsequent eigenvalue decomposition in a direction-finding measurement application.

The computer implemented method according to the present disclosure may be provided as an additional function of a measurement application device, like a direction finder or a digital direction finder. In such embodiments, a processor in the measurement application device may execute a computer program that comprises instructions that when executed by the processor cause the processor to perform a method according to any one of the embodiments provided in the present disclosure. Such a measurement application device may further comprise a data interface configured to receive input data acquired with at least one direction-finding antenna, and a respective output interface.

The processor may be configured to provide the input data to a pre-trained artificial intelligence algorithm that is trained to determine the number of received signals based on the input data, and to execute the pre-trained artificial intelligence algorithm. After the number of received signals is determined, the processor may output the number of received signals determined by the pre-trained artificial intelligence algorithm via the output interface.

Generally, the method according to the present disclosure may comprise receiving input data acquired with at least one direction-finding antenna, providing the input data to a pre-trained artificial intelligence algorithm that is trained to determine the number of received signals based on the input data, and outputting the number of received signals determined by the pre-trained artificial intelligence algorithm.

The direction-finding antenna may comprise at least two antenna elements or may comprise at least two dedicated antennas. A single direction-finding antenna with two or more antenna elements may also be called a "beamforming antenna", or a "smart antenna". In embodiments one or more direction-finding antennas with two or more antenna elements may be used. One of the antenna elements, or one of the dedicated antennas may form a reference antenna element, or reference antenna in order determine statistic values correctly, as will be explained in more detail below.

The processor of the measurement application device may comprise or may be provided in or as part of at least one of a dedicated processing element e.g., a processing unit, a microcontroller, a field programmable gate array, FPGA, a complex programmable logic device, CPLD, an application specific integrated circuit, ASIC, or the like. A respective program or configuration may be provided to implement the required functionality. The processor may at least in part also be provided as a computer program product comprising computer readable instructions that may be executed by a processing element. In a further embodiment, the processor may be provided as addition or additional function or method to the firmware or operating system of a processing element that is already present in the respective application as respective computer readable instructions. Such computer readable instructions may be stored in a memory that is coupled to or integrated into the processing element. The processing element may load the computer readable instructions from the memory and execute them.

In addition, it is understood, that any required supporting or additional hardware may be provided like e.g., a power supply circuitry and clock generation circuitry.

In embodiments where the method is executed in a measurement application device that comprises the measurement interface to acquire the input data with a direction-finding antenna, the method may be executed directly in the measurement application device with the input data as measured. In such an embodiment, the data interface may be implemented as the measurement interface of the measurement application device.

In other embodiments, the measurement application device may be a device that supports a measurement application, but not necessarily is capable of acquiring measurement data via a measurement interface. In such an embodiment, the measurement application device may only perform the required computations based on the input data, and provide a respective result. The input data may be provided to such a measurement application device e.g., as digital data or digital data stream. The data interface in such an embodiment may be provided as any kind of digital data interface. Possible types of data interfaces comprise, but are not limited to, any kind of wired and wireless communication interfaces, like for example a network communication interface, especially an Ethernet, wireless LAN or WIFI interface, a USB interface, a Bluetooth interface, an NFC interface, a visible or non-visible light-based interface, especially an infrared interface.

In embodiments, the method according to the present disclosure may be executed on a server or cloud computing arrangement. In such embodiments, the measurement application device may be a computer or server. Such a server or cloud computing arrangement may be coupled to other measurement application devices, for example, measurement application devices with only little processing power, and may perform the method according to the present disclosure for such measurement application devices, and return the results computed by the pre-trained artificial intelligence algorithm to the respective measurement application device.

In other embodiments, the measurement application device implemented on a server or cloud computing arrangement may be accessed by a user via a website-based interface. Such a website may e.g., be delivered by the server or cloud computing arrangement to a web browser that is executed on a users' computer. The website may serve as a user interface for the user to control the server or cloud computing arrangement. Such a website may e.g., offer the user the possibility to select stored input data for processing with a method according to the present invention, and may present the computation results to a user.

Generally, a measurement application device according to the present disclosure may comprise any device that may be used in a measurement application to acquire an input signal or to generate an output signal, or to perform additional or supporting functions in a measurement application. A measurement application device may also comprise or be implemented as application or applications, also called measurement application or measurement applications, that may be executed on a computer device and that may communicate with other measurement application devices in order to perform a measurement task. A measurement application, also called measurement setup, may e.g., comprise at least one or multiple different measurement application devices for performing electric, magnetic, or electromagnetic measurements, especially on single devices under test. Such electric, magnetic, or electromagnetic measurements may be performed in a measurement laboratory or in a production facility in the respective production line. A measurement application or measurement setup may serve to qualify the single devices under test i.e., to determine the proper electrical operation of the respective devices under test.

Measurement application devices to this end may comprise at least one signal acquisition section for acquiring electric, magnetic, or electromagnetic signals to be measured from a device under test, or at least one signal generation section for generating electric, magnetic, or electromagnetic signals that may be provided to the device under test. Such a signal acquisition section may comprise, but is not limited to, a front-end for acquiring, filtering, and attenuating or amplifying electrical signals. The signal generation section may comprise, but is not limited to, respective signal generators, amplifiers, and filters.

Further, when acquiring signals, measurement application devices may comprise a signal processing section that may process the acquired signals. Processing may comprise converting the acquired signals from analog to digital signals, and any other type of digital signal processing, for example, converting signals from the time-domain into the frequency-domain.

The measurement application devices may also comprise a user interface to display the acquired signals to a user and allow a user to control the measurement application devices. Of course, a housing may be provided that comprises the elements of the measurement application device. It is understood, that further elements, like power supply circuitry, and communication interfaces may be provided.

A measurement application device may be a stand-alone device that may be operated without any further element in a measurement application to perform tests on a device under test. Of course, communication capabilities may also be provided for the measurement application device to interact with other measurement application devices.

A measurement application device may comprise, for example, a signal acquisition device e.g., an oscilloscope, especially a digital oscilloscope, a spectrum analyzer, or a vector network analyzer. Such a measurement application device may also comprise a signal generation device e.g., a signal generator, especially an arbitrary signal generator, also called arbitrary waveform generator, or a vector signal generator. Further possible measurement application devices comprise devices like calibration standards, or measurement probe tips.

Of course, at least some of the possible functions, like signal acquisition and signal generation, may be combined in a single measurement application device.

In embodiments, the measurement application device may comprise pure data acquisition devices that are capable of acquiring an input signal and of providing the acquired input signal as digital input signal to a respective data storage or application server. Such pure data acquisition devices not necessarily comprise a user interface or display. Instead, such pure data acquisition devices may be controlled remotely e.g., via a respective data interface, like a network interface or a USB interface. The same applies to pure signal generation devices that may generate an output signal without comprising any user interface or configuration input elements. Instead, such signal generation devices may be operated remotely via a data connection.

With the method or measurement application device according to the present disclosure, an additional quality metric may be provided in direction-finding measurement applications, resulting in higher confidence regarding the result of the direction-finding measurements. That is especially useful for direction-finding algorithms implemented for single emitters since in this case only bearings from single emitters are trustworthy. If multiple emitters are present, it is more likely that the bearing value may contain a larger error.

Especially, since the training of the pre-trained artificial intelligence algorithm may be performed independently of the application of the pre-trained artificial intelligence algorithm, devices with low computing power may be used to perform the method according to the present disclosure. The training of the pre-trained artificial intelligence algorithm may, in contrast, be performed with respective computational devices or arrangements that provide the required computing power to perform the training.

In general, users are provided with high value information about the number of emitters, while this feature may be implemented on rather low-cost devices that cannot afford to implement the complex methods known in the art.

Further embodiments of the present disclosure are subject of the further dependent claims and of the following description, referring to the drawings.

In the following, the dependent claims referring directly or indirectly to claim 1 are described in more detail. For the avoidance of doubt, the features of the dependent claims relating to the method can be combined in all variations with each other and the disclosure of the description is not limited to the claim dependencies as specified in the claim set. Further, the features of the other independent claims may be combined with any of the features of the dependent claims relating to the method in all variations, wherein respective apparatus elements may perform the respective method steps.

In an embodiment, which can be combined with all other embodiments of the method mentioned above or below, the input data may comprise at least one of raw data as received by the at least one antenna, statistical information derived from the raw data, and a signal-to-noise ratio, or SNR estimation, wherein the method further comprises calculating the statistical information and the SNR estimation based on the raw data.

The data to be processed i.e., the raw data, may be described by the following system model:

$$y(t) = A(\theta)s(t) + n(t),$$

where y is represented by the received signal at time slot t at the antenna outputs of a direction-finding (DF) antenna. $A(\theta)$ is the steering matrix for L signals and n(t) is the additive white gaussian noise. $\theta$ contain the incoming angles of the L emitters expressed in azimuth and elevation.

The DF antenna is composed by M antenna elements placed in a certain geometry e.g., a uniformed circular array (UCA) or uniformed linear array (ULA). One antenna element is selected as a reference element, here denoted as element 0, which can be a dipole element situated in the middle of the UCA or an element situated on the array. The antenna responses retrieved from the M elements are stacked in a vector and referenced by the reference element, according to

$$\overline{y_{ref}} = \begin{bmatrix} y_1 \\ \vdots \\ y_m \end{bmatrix} y_0^H$$

After the referencing y, the phase of the emitting signal is removed. $Y_{ref}(t)$ is observed during N snapshots where t = 1,...,N. Based on these time series statistical information of $Y_{ref}$ over time is obtained.

Statistical information derived for this complex valued raw data varies with the signal scenario. Depending on if there is noise, one incoming wave or more incoming waves on the frequency band, there is a different model order of the underlying propagation model. Each model order has its own distribution of statistical information.. The pre-trained artificial intelligence algorithm may be trained to determine the model order i.e., the number of received signals based on these differences.

The statistical information derived from the raw data may comprise, but is not limited to a mean value, a standard deviation, a variance Y that is complex and can be expressed as y = $Ae^{j\varphi}$. The statistical information such as mean value, standard deviation and variance related to the phase $\varphi$ may be estimated according to circular statistics.

A SNR estimation may be provided in addition to the statistical information, since the statistical information varies with the SNR. For example, one expects a low variance for a single emitter with a strong SNR but a high variance with weak SNR. Further statistical information derived from the raw data may comprise a phase variance of the input data over the SNR.

In a further embodiment, which can be combined with all other embodiments of the method mentioned above or below, the method may further comprise calculating as additional input data at least one of quality metrics determined based on the raw data as received by the at least one antenna, antenna parameters of the at least one antenna, and statistical values derived from multiple result sets provided by a direction-finding algorithm, wherein the statistical values comprise at least one of a mean value, a standard deviation, a variance, and for circular data a circular standard deviation.

The quality metrics may comprise metrics that are used by the direction-finding algorithm. Examples of such metrics comprise, but are not limited to, the outcome of the direction-finding algorithm. In case of correlative interferometer that could be for example the correlation coefficient and the corresponding bearing value. Time series of these metrics vary with the underlying model order, e.g. depending on the DF algorithm used the bearings and correlation coefficients are stable for one signal, but may vary as there are multiple emitters Further metrics may comprise a noise level, and a signal-to-noise ratio.

The antenna parameters may refer to known parameters of the antenna and are needed for the steering matrix A(θ) used for simulating the raw data.. For one impinging wave with the wavelength λ with the azimuth angle $\alpha$ to a reference point, the steering matrix can be expressed by a vector a($\alpha$) and would for a UCA be characterized by:

$$a(\alpha) = \begin{bmatrix} c_1(\alpha) \cdot e^{\frac{j\pi}{\lambda}|D|\cos(\alpha-\beta_1)} \\ c_2(\alpha) \cdot e^{\frac{j\pi}{\lambda}|D|\cos(\alpha-\beta_2)} \\ \vdots \\ c_M(\alpha) \cdot e^{\frac{j\pi}{\lambda}|D|\cos(\alpha-\beta_M)} \end{bmatrix}$$

The antenna parameters may refer e.g., to known physical characteristics of the antenna, like the number of antenna elements (M), the diameter of the antenna array (D), the position of the element i $\beta_i$ to the reference point and if directional antenna elements are used, parameters describing their directional patterns c($\alpha$) in case that an antenna array is used. The steering matrix may also be expressed by radiation patterns obtained from precise antenna measurements of the direction-finding antenna.

The statistical values may refer to the same values as the statistical information, i.e., a mean value, a standard deviation, a variance, and a circular standard deviation for circular data. However, the statistical values are, in contrast to the statistical information explained above, calculated for multiple results of a direction-finding algorithm as a time-series.

While the direction-finding algorithm is not explicitly claimed or explained in the present disclosure, the direction-finding algorithm may be provided as an algorithm that performs the core function of direction-finding, while the method according to the present disclosure may be performed in addition to the direction-finding.

As such, the direction-finding algorithm may be implemented in the same measurement application device as the method according to the present disclosure, or on another measurement application device that may be communicatively coupled to the measurement application device that performs the method according to the present disclosure.

In a further embodiment, which can be combined with all other embodiments of the method mentioned above or below, the pre-trained artificial intelligence algorithm may be trained to output the number of received signals, and especially the number of received signals and multipath reflections in the received signals, as exact number. As alternative, the pre-trained artificial intelligence algorithm may be trained to output the number of received signals, and especially multipath reflections in the received signals, as qualitative indication, wherein the qualitative indication indicates zero received signals and/or multipath reflections, or one received signal and/or multipath reflection, or more than one received signal and/or multipath reflections.

The pre-trained artificial intelligence algorithm may be formed and trained in different possible ways. In embodiments, the pre-trained artificial intelligence algorithm may be arranged or formed such that it may output the exact number of received signals, or of received signals and multipath reflections in the received signals. However, such an embodiment may require a more complex pre-trained artificial intelligence algorithm and may not be applicable in every type of measurement application device.

Therefore, in other embodiments, the pre-trained artificial intelligence algorithm may be arranged or formed such that it may only output one of three possible classes as the number of received signals. One class may refer to zero received signals and/or multipath reflections. Another class may refer to one received signal, and another class may refer to more than one received signal and/or multipath reflection.

When implemented to only comprise three output classes, the pre-trained artificial intelligence algorithm may also be implemented or executed on measurement application devices with only little computing resources or may be used in applications that do not need more than the three classes.

In another embodiment, which can be combined with all other embodiments of the method mentioned above or below, the pre-trained artificial intelligence algorithm may comprise at least one of a feed forward neural network, a convolutional neural network, a recurrent neural network, a decision tree, and a logistic regression algorithm.

In different scenarios, different types of pre-trained artificial intelligence algorithms may be adequate to determine the number of received signals based on the input data.

The specific implementation of the pre-trained artificial intelligence algorithm may e.g., depend on the processing power that is available in the respective measurement application, and other hardware constraints.

Such other hardware constraints may refer e.g., to the measurement capabilities of the respective measurement application device that may result in a specific, or limited set of measurement data. This is especially true for mobile measurement application devices that may be used for live or in-field direction-finding measurements.

The selection of a specific implementation for the pre-trained artificial intelligence algorithm may, especially, depend on the specific system requirements regarding power efficiency, real-time requirements and accuracy of the respective application.

When implemented as feed forward neural network, the pre-trained artificial intelligence algorithm may, for example, comprise a dense input layer, wherein the dimension depends on the input features that are provided to the pre-trained artificial intelligence algorithm. A dedicated dimension may be provided per input variable or value that is provided to the pre-trained artificial intelligence algorithm. The feed forward neural network may comprise three or more hidden layers. The number of hidden layers may be limited to between three and five hidden layers, especially in low computing power implementations. The output classification layer may be provided according to the number of output classes. The term "output classes" refers to the different outputs that the feed forward neural network may provide. For example, three output classes are present if the feed forward neural network outputs a qualitative indication, like zero received signals and/or multipath reflections, or one received signal and/or multipath reflection, or more than one received signal and/or multipath reflections If the exact number of received signals is provided by the feed forward neural network, a maximum number may be defined, and a respective number of output classes may be provided.

When implemented as convolutional neural network, the pre-trained artificial intelligence algorithm may comprise a convolutional input layer, wherein the dimension depends on the input features that are provided to the pre-trained artificial intelligence algorithm. A dedicated dimension may be provided per input variable or value that is provided to the pre-trained artificial intelligence algorithm. The convolutional neural network may comprise three or more hidden layers. The number of hidden layers may be limited to between three and five hidden layers, especially in low computing power implementations. The explanations provided above regarding the output classification layer of the feed forward neural network also apply to the output classification layer of the convolutional neural network.

In an embodiment, with the pre-trained artificial intelligence algorithm being implemented as convolutional neural network, a convolutional input layer may be provided. Such an input layer may be provided with the raw input data, which is usually present as complex values, in the form of at least one of a real part, an imaginary part, an absolute value, and a phase of the respective complex values. In a further embodiment, the input layer may further be provided with the phase variance of the input data over the SNR. As indicated above, the phase variance of the input data over the SNR may be a statistical information derived from the raw data.

When implemented as a recurrent neural network, the input layer may comprise a recurrent input layer, like an LSTM. The explanations provided above, regarding the feed forward neural network, and the convolutional neural network apply mutatis mutandis to the recurrent neural network.

When using a decision trees, any implementation of a decision tree may be used. In embodiments, advanced decision tree versions, like Gradient boosted trees, for example, the XGBoost, may be implemented.

In an embodiment, which can be combined with all other embodiments of the method mentioned above or below, the pre-trained artificial intelligence algorithm is pre-trained using at least one of a supervised learning, a semi-supervised learning, and an unsupervised learning.

In another embodiment, which can be combined with all other embodiments of the method mentioned above or below, the pre-trained artificial intelligence algorithm is pre-trained using training data comprising at least one of synthetically generated training data, measurement data measured in a controlled environment, and live raw data.

Although not explicitly claimed, the present disclosure further provides a method for training the artificial intelligence algorithm for determining the number of received signals based on respective input data.

Such a method for training the artificial intelligence algorithm may comprise training the artificial intelligence algorithm using at least one of a supervised learning, a semi-supervised learning, and an unsupervised learning.

Using a supervised learning approach comprises using training data with known or expected outputs that the pre-trained artificial intelligence algorithm should provide based on the respective training data.

In embodiments, the training may also comprise multiple training phases. For example, a first training phase may comprise a supervised pretraining using synthetic data. A second training phase may comprise a supervised learning for finetun-ing the pre-trained artificial intelligence algorithm using actual measured data for which the expected output of the pre-trained artificial intelligence algorithm is well known.

Generally, the artificial intelligence algorithm may be trained using training data comprising at least one of synthetically generated training data, measurement data measured in a controlled environment, live raw data.

The term "synthetically generated data" refers to training data that may be generated based on the mathematical foundations known in the field of direction-finding, as explained above for the formula $y(t) = A(\theta)s(t) + n(t)$. A steering matrix may for such data be modelled by common antenna parameters describing the geometry and pattern function of the direction-finding antenna.

The term "measurement data" refers to radiation patterns obtained from precise antenna measurements of the direction-finding antenna in a clean and defined environment, like an antenna test chamber. Real measurement data may provide better training results than pure synthetic data.

The term "live raw data" refers to data recorded during live-operation of a direction-finding system in a real-world scenario. Such data may be available only in a limited amount, and may, therefore, especially be used not only for performing the basic training of the pre-trained artificial intelligence algorithm, but for fine-tuning the pre-trained artificial intelligence algorithm.

## BRIEF DESCRIPTION OF THE DRAWINGS

For a more complete understanding of the present disclosure and advantages thereof, reference is now made to the following description taken in conjunction with the accompanying drawings. The disclosure is explained in more detail below using exemplary embodiments which are specified in the schematic figures of the drawings, in which:

Figure 1 shows a flow diagram of an embodiment of a method according to the present disclosure;

Figure 2 shows a flow diagram of another embodiment of a method according to the present disclosure;

Figure 3 shows a block diagram of an embodiment of a measurement application device according to the present disclosure; and

Figure 4 shows a block diagram of another embodiment of a measurement application device according to the present disclosure.

In the figures like reference signs denote like elements unless stated otherwise.

## DETAILED DESCRIPTION OF THE DRAWINGS

For sake of clarity, the reference signs used in the device-based figures, are also provided in the method-based figures.

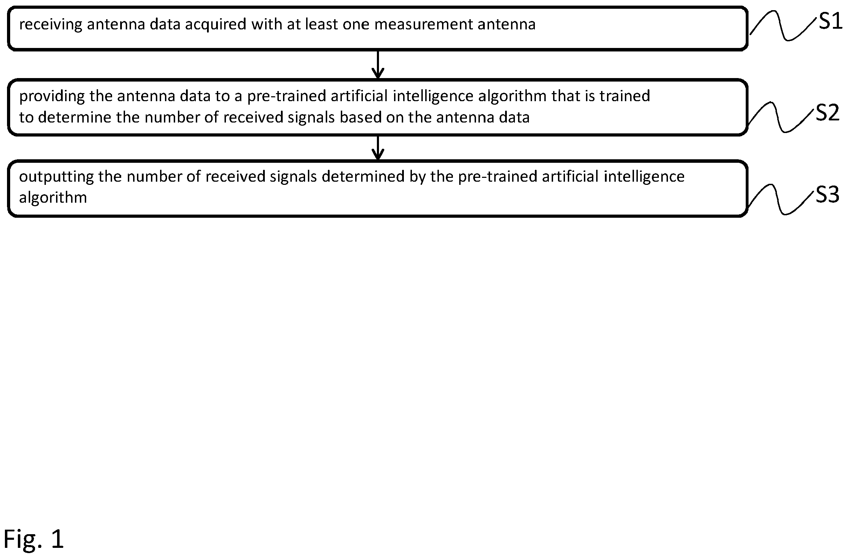

Figure 1 shows a flow diagram of a method for estimating the number of received signals in a direction-finding measurement application.

The method comprises receiving S1 input data 102 acquired with at least one direction-finding antenna 199, 299, providing S2 the input data 102 to a pre-trained artificial intelligence algorithm 104 that is trained to determine the number of received signals 105 based on the input data 102, and outputting S3 the number of received signals 105 determined by the pre-trained artificial intelligence algorithm 104.

The pre-trained artificial intelligence algorithm 104 may comprises e.g., a feed forward neural network, a convolutional neural network, a recurrent neural network, a decision tree, or a logistic regression algorithm. It is understood, that in embodiments, multiple different types or differently trained pre-trained artificial intelligence algorithms may be used in parallel.

The pre-trained artificial intelligence algorithm 104 may be trained to output the number of received signals 105, and especially the number of received signals 105 and multipath reflections in the received signals, as exact number. In other embodiments, the pre-trained artificial intelligence algorithm 104 may be trained to output the number of received signals 105, and especially multipath reflections in the received signals, as qualitative indication. The qualitative indication may e.g., indicate zero received signals and/or multipath reflections, one received signal and/or multipath reflection, or more than one received signal and/or multipath reflection.

Although not explicitly shown, the pre-trained artificial intelligence algorithm 104 may be pre-trained using any combination of a supervised learning, a semi-supervised learning, and an unsupervised learning.

The training data used for training the pre-trained artificial intelligence algorithm may comprise at least one of synthetically generated training data, measurement data measured in a controlled environment, and live raw data.

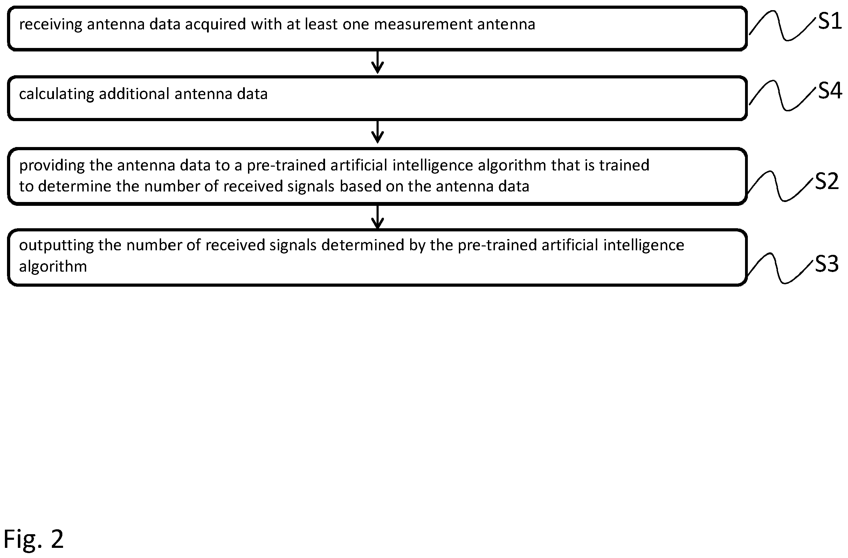

Figure 2 shows a flow diagram of another method for estimating the number of received signals in a direction-finding measurement application. The method of figure 2 is based on the method of figure 1. Therefore, the method of figure 1 comprises receiving S1 input data 102 acquired with at least one direction-finding antenna 199, 299, providing S2 the input data 102 to a pre-trained artificial intelligence algorithm 104 that is trained to determine the number of received signals 105 based on the input data 102, and outputting S3 the number of received signals 105 determined by the pre-trained artificial intelligence algorithm 104. The explanations provided above for the method of figure 1 apply mutatis mutandis to the method of figure 2.

The method of figure 2 further comprises after receiving S1 the input data 102, calculating S4 as additional input data 102 at least one of quality metrics determined based on the raw data as received by the at least one antenna, antenna parameters of the at least one antenna, and statistical values derived from multiple result sets provided by a direction-finding algorithm, wherein the statistical values comprise at least one of a mean value, a standard deviation, a variance, and for circular data a circular standard deviation.

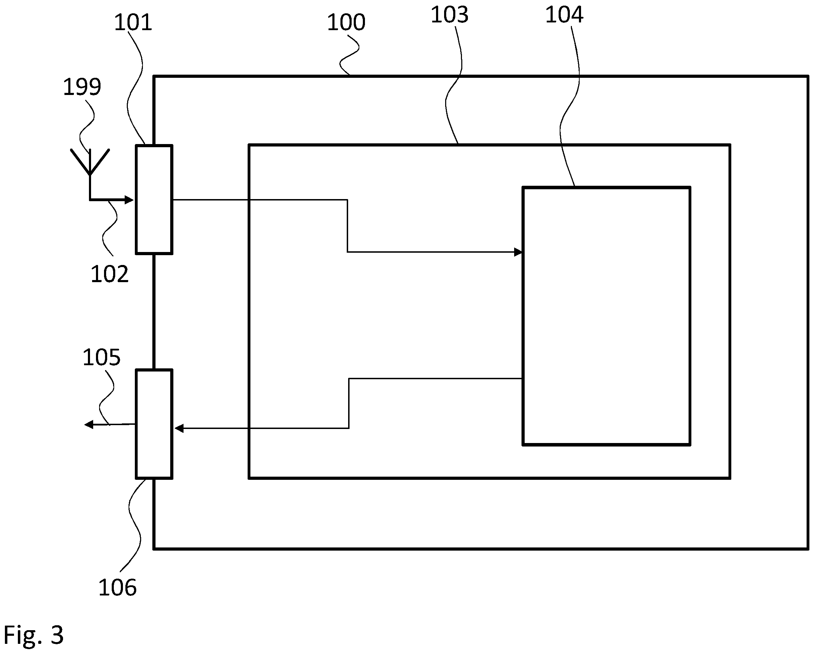

Figure 3 shows a measurement application device 100. The measurement application device 100 comprises a data interface 101 configured to receive input data 102 acquired with at least one direction-finding antenna 199, that is not part of the measurement application device 100. In other embodiments, the direction-finding antenna 199 may also be provided as part of the measurement application device 100. The measurement application device 100 further comprises an output interface 106, and a processor 103 coupled to the data interface 101, and to the output interface 106.

During operation, the processor 103 may perform a method as shown in figures 1 and 2, or any other embodiment of a method as disclosed herein.

To this end, the processor 103 may provide the input data 102 to a pre-trained artificial intelligence algorithm 104 that is trained to determine the number of received signals 105 based on the input data 102. The processor 103 may further execute the pre-trained artificial intelligence algorithm 104, and output the number of received signals 105 determined by the pre-trained artificial intelligence algorithm 104 via the output interface 106.

The input data 102 may comprise raw data as received by the at least one antenna. Further, the input data 102 may comprise statistical information derived from the raw data. Such statistical information may be calculated by the processor 103, or may be provided to the processor 103 via the data interface 101.

The processor 103 may also determine additional input data 102. The processor 103 may e.g., calculate or determine quality metrics determined based on the raw data as received by the at least one antenna, antenna parameters of the at least one antenna, and statistical values derived from multiple result sets provided by a direction-finding algorithm, wherein the statistical values comprise at least one of a mean value, a standard deviation, a variance, and for circular data a circular standard deviation.

The processor 103 may calculate this additional input data, or may receive the additional input data from any other device e.g., a signal processing chain of a direction finder that is coupled to the direction-finding antenna 199.

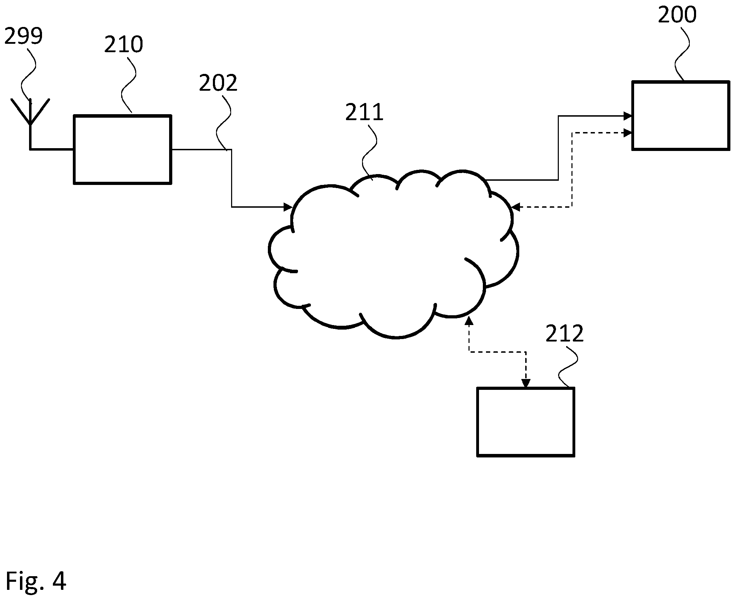

Figure 4 shows a block diagram of a measurement application device 200 in a measurement application. The measurement application comprises a measurement device 210 e.g., a direction finder, with a direction-finding antenna 299. Further, the measurement application comprises a measurement application device 200, and a user PC 212. The measurement device 210, the measurement application device 200, and the user PC 212 that are coupled to a network 211.

It is indicated by solid lines that the measurement device 210 communicates via the network 211 with measurement application device 200. Further, indicated by dashed lines, the measurement application device 200 communicates with the user PC 212 via dashed lines.

In the measurement application, the user PC 212 may serve as a kind of front-end or user interface for a user to interact with the measurement application device 200. The measurement application device 200 may e.g., comprise a (cloud-) server that serves a webpage or website to a browser application running on the user PC 212. In order to perform the method according to the present disclosure, the measurement application device 200 may receive or retrieve the input data 202 from the measurement device 210. The measurement application device 200 may also be provided as native application that is executed on the user PC 212.

In other embodiments, the measurement application device 200 may be integrated into the measurement device 210. The user PC 212 may in such embodiments serve as a kind of remote-controller or may execute a remote-control application for the measurement device 210.

The processes, methods, or algorithms disclosed herein can be delivera-ble to/implemented by a processing device, controller, or computer, which can include any existing programmable electronic control unit or dedicated electronic control unit. Similarly, the processes, methods, or algorithms can be stored as data and instructions executable by a controller or computer in many forms including, but not limited to, information permanently stored on non-writable storage media such as ROM devices and information alterably stored on writeable storage media such as floppy disks, magnetic tapes, CDs, RAM devices, and other magnetic and optical media. The processes, methods, or algorithms can also be implemented in a software executable object. Alternatively, the processes, methods, or algorithms can be embodied in whole or in part using suitable hardware components, such as Application Specific Integrated Circuits (ASICs), Field-Programmable Gate Arrays (FPGAs), state machines, controllers or other hardware components or devices, or a combination of hardware, software, and firmware components.

While exemplary embodiments are described above, it is not intended that these embodiments describe all possible forms encompassed by the claims. The words used in the specification are words of description rather than limitation, and it is understood that various changes can be made without departing from the spirit and scope of the disclosure. As previously described, the features of various embodiments can be combined to form further embodiments of the invention that may not be explicitly described or illustrated. While various embodiments could have been described as providing advantages or being preferred over other embodiments or prior art implementations with respect to one or more desired characteristics, those of ordinary skill in the art recognize that one or more features or characteristics can be compromised to achieve desired overall system attributes, which depend on the specific application and implementation. These attributes can include, but are not limited to cost, strength, durability, life cycle cost, marketability, appearance, packaging, size, serviceability, weight, manufacturability, ease of assembly, etc. As such, to the extent any embodiments are described as less desirable than other embodiments or prior art implementations with respect to one or more characteristics, these embodiments are not outside the scope of the disclosure and can be desirable for particular applications.

With regard to the processes, systems, methods, heuristics, etc. described herein, it should be understood that, although the steps of such processes, etc. have been described as occurring according to a certain ordered sequence, such processes could be practiced with the described steps performed in an order other than the order described herein. It further should be understood that certain steps could be performed simultaneously, that other steps could be added, or that certain steps described herein could be omitted. In other words, the descriptions of processes herein are provided for the purpose of illustrating certain embodiments, and should in no way be construed so as to limit the claims.

Accordingly, it is to be understood that the above description is intended to be illustrative and not restrictive. Many embodiments and applications other than the examples provided would be apparent upon reading the above description. The scope should be determined, not with reference to the above description, but should instead be determined with reference to the appended claims, along with the full scope of equivalents to which such claims are entitled. It is anticipated and intended that future developments will occur in the technologies discussed herein, and that the disclosed systems and methods will be incorporated into such future embodiments. In sum, it should be understood that the application is capable of modification and variation.

All terms used in the claims are intended to be given their broadest reasonable constructions and their ordinary meanings as understood by those knowledgeable in the technologies described herein unless an explicit indication to the contrary in made herein. In particular, use of the singular articles such as "a," "the," "said," etc. should be read to recite one or more of the indicated elements unless a claim recites an explicit limitation to the contrary.

The abstract of the disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in various embodiments for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus, the following claims are hereby incorporated into the Detailed Description, with each claim standing on its own as a separately claimed subject matter.

While exemplary embodiments are described above, it is not intended that these embodiments describe all possible forms of the invention. Rather, the words used in the specification are words of description rather than limitation, and it is understood that various changes may be made without departing from the spirit and scope of the invention. Additionally, the features of various implementing embodiments may be combined to form further embodiments of the invention.

## LIST OF REFERENCE SIGNS

| | |
|---|---|
| 100, 200 | measurement application device |
| 101 | data interface |
| 102, 202 | input data |
| 103 | processor |
| 104 | pre-trained artificial intelligence algorithm |
| 105 | number of received signals |
| 106 | output interface |

| | |
|---|---|
| 210 | measurement device |
| 211 | network |
| 212 | user PC |

| | |
|---|---|
| 199, 299 | direction-finding antenna |

| | |
|---|---|
| S1 - S4 | method steps |

## Claims

1. A computer implemented method for estimating the number of received signals (105) in a direction-finding measurement application, the method comprising:

   receiving (S1) input data (102, 202) acquired with at least one direction-finding antenna (199, 299);
   providing (S2) the input data (102, 202) to a pre-trained artificial intelligence algorithm (104) that is trained to determine the number of received signals (105) based on the input data (102, 202); and
   outputting (S3) the number of received signals (105) determined by the pre-trained artificial intelligence algorithm (104).

2. The computer implemented method according to claim 1, wherein the input data (102, 202) comprises at least one of:

   raw data as received by the at least one antenna;
   statistical information derived from the raw data, especially wherein the method further comprises calculating the statistical information based on the raw data; and
   a signal-to-noise ratio estimation, wherein the method further comprises calculating the signal-to-noise ratio estimation.

3. The computer implemented method according to any one of the preceding claims, wherein the method further comprises calculating (S4) as additional input data (102, 202) at least one of:

   quality metrics determined based on the raw data as received by the at least one antenna;
   antenna parameters of the at least one antenna; and
   statistical values derived from multiple result sets provided by a direction-finding algorithm, wherein the statistical values comprise at least one of a mean value, a standard deviation, a variance, and for circular data a circular standard deviation.

4. The computer implemented method according to any one of the preceding claims, wherein the pre-trained artificial intelligence algorithm (104) is trained to output the number of received signals (105), and especially the number of received signals (105) and multipath reflections in the received signals, as exact number; or
   wherein the pre-trained artificial intelligence algorithm (104) is trained to output the number of received signals (105), and especially multipath reflections in the received signals, as qualitative indication, wherein the qualitative indication indicates zero received signals and/or multipath reflections, or one received signal and/or multipath reflection, or more than one received signal and/or multipath reflection.

5. The computer implemented method according to any one of the preceding claims, wherein the pre-trained artificial intelligence algorithm (104) comprises at least one of:

   a feed forward neural network;
   a convolutional neural network;
   a recurrent neural network;
   a decision tree; and
   a logistic regression algorithm.

6. The computer implemented method according to any one of the preceding claims, wherein the pre-trained artificial intelligence algorithm (104) is pre-trained using at least one of:

   a supervised learning;
   a semi-supervised learning; and
   an unsupervised learning.

7. The computer implemented method according to any one of the preceding claims, wherein the pre-trained artificial intelligence algorithm (104) is pre-trained using training data comprising at least one of:

   synthetically generated training data;
   measurement data measured in a controlled environment; and

live raw data.

8. A computer program product comprising instructions that when executed by a processor (103) cause the processor (103) to perform a method according to any one of the preceding claims.

9. A measurement application device (100, 200), comprising

a data interface (101) configured to receive input data (102, 202) acquired with at least one direction-finding antenna (199, 299);
an output interface (106); and
a processor (103) coupled to the data interface (101), and to the output interface (106);
wherein the processor (103) is configured to provide the input data (102, 202) to a pre-trained artificial intelligence algorithm (104) that is trained to determine the number of received signals (105) based on the input data (102, 202), and to execute the pre-trained artificial intelligence algorithm (104); and
wherein the processor (103) is further configured to output the number of received signals (105) determined by the pre-trained artificial intelligence algorithm (104) via the output interface (106).

10. The measurement application device (100, 200) according to claim 9, wherein the input data (102, 202) comprises at least one of:

raw data as received by the at least one antenna;
statistical information derived from the raw data; and
a signal-to-noise ratio estimation.

11. The measurement application device (100, 200) according to any one of the preceding device-based claims, wherein the processor (103) is configured to determine additional input data (102, 202) comprising at least one of:

quality metrics determined based on the raw data as received by the at least one antenna;
antenna parameters of the at least one antenna; and
statistical values derived from multiple result sets provided by a direction-finding algorithm, wherein the statistical values comprise at least one of a mean value, a standard deviation, a variance, and for circular data a circular standard deviation.

12. The measurement application device (100, 200) according to any one of the preceding device-based claims, wherein the pre-trained artificial intelligence algorithm (104) is trained to output the number of received signals (105), and especially multipath reflections in the received signals, as exact number; or wherein the pre-trained artificial intelligence algorithm (104) is trained to output the number of received signals (105), and especially multipath reflections in the received signals, as qualitative indication, wherein the qualitative indication indicates zero received signals and/or multipath reflections, or one received signal and/or multipath reflection, or more than one received signal and/or multipath reflection.

13. The measurement application device (100, 200) according to any one of the preceding device-based claims, wherein the pre-trained artificial intelligence algorithm (104) comprises at least one of:

a feed forward neural network;
a convolutional neural network;
a recurrent neural network;
a decision tree; and
a logistic regression algorithm.

14. The measurement application device (100, 200) according to any one of the preceding device-based claims, wherein the pre-trained artificial intelligence algorithm (104) is pre-trained using at least one of:

a supervised learning;
a semi-supervised learning; and
an unsupervised learning.

15. The measurement application device (100, 200) according to any one of the preceding device-based claims, wherein the pre-trained artificial intelligence algorithm (104) is pre-trained using training data comprising at least one of:

synthetically generated training data;
measurement data measured in a controlled environment; and
live raw data.

receiving antenna data acquired with at least one measurement antenna ⌇S1

providing the antenna data to a pre-trained artificial intelligence algorithm that is trained to determine the number of received signals based on the antenna data ⌇S2

outputting the number of received signals determined by the pre-trained artificial intelligence algorithm ⌇S3

Fig. 1

receiving antenna data acquired with at least one measurement antenna — S1

calculating additional antenna data — S4

providing the antenna data to a pre-trained artificial intelligence algorithm that is trained to determine the number of received signals based on the antenna data — S2

outputting the number of received signals determined by the pre-trained artificial intelligence algorithm — S3

Fig. 2

Fig. 3

Fig. 4

Europäisches Patentamt

European Patent Office

Office européen des brevets

# EUROPEAN SEARCH REPORT

Application Number

**EP 23 18 8623**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JIANYUAN YU ET AL: "Model Order Estimation in the Presence of multipath Interference using Residual Convolutional Neural Networks", ARXIV.ORG, CORNELL UNIVERSITY LIBRARY, 201 OLIN LIBRARY CORNELL UNIVERSITY ITHACA, NY 14853, 1 September 2022 (2022-09-01), XP091308629, * figures 1-2 * * table III * * I. Introduction II. Proposed Systems and Models * | 1-15 | INV. G01S3/10 G01S3/14 G01S3/74 |
| A | US 2023/168330 A1 (SMYTH AIDAN [US] ET AL) 1 June 2023 (2023-06-01) * paragraph [0021] – paragraph [0028] * | 1-15 | |
| A | US 2023/144796 A1 (DEPOY DANIEL [US] ET AL) 11 May 2023 (2023-05-11) * figure 4 * * paragraph [0105] – paragraph [0124] * | 1-15 | |

TECHNICAL FIELDS SEARCHED (IPC)

G01S

The present search report has been drawn up for all claims

| Place of search | Date of completion of the search | Examiner |
|---|---|---|
| Munich | 12 December 2023 | Bomart, Sébastien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 18 8623

This annex lists the patent family members relating to the patent documents cited in  the above-mentioned European search report.
The members are as contained in the European Patent Office EDP file on
The European Patent Office is in no way liable for these particulars which are merely given for the purpose of information.

12-12-2023

| Patent document cited in search report | Publication date | Patent family member(s) | | Publication date |
|---|---|---|---|---|
| US 2023168330 A1 | 01-06-2023 | CN | 114175534 A | 11-03-2022 |
| | | DE | 112020003509 T5 | 14-04-2022 |
| | | JP | 2022541607 A | 26-09-2022 |
| | | US | 2021025962 A1 | 28-01-2021 |
| | | US | 2023168330 A1 | 01-06-2023 |
| | | WO | 2021016003 A1 | 28-01-2021 |
| US 2023144796 A1 | 11-05-2023 | US | 2023144796 A1 | 11-05-2023 |
| | | WO | 2022203761 A2 | 29-09-2022 |

EPO FORM P0459

For more details about this annex : see Official Journal of the European Patent Office, No. 12/82